# EUROPEAN PATENT APPLICATION

(11) **EP 4 576 398 A1**
(43) Date of publication of application: **25.06.2025**
(21) Application number: 24207868.1
(22) Date of filing: 21.10.2024
(51) Int. Cl.: H01M 50/507, H01M 50/569, H01M 50/30, H01M 50/209

(54) **BATTERY MODULE AND BATTERY PACK INCLUDING THE SAME**

(30) Priority: 20.12.2023 KR 20230187373
(71) Applicant: SK On Co., Ltd., Seoul 03161 (KR)
(72) Inventor: JANG, Sun Ho, 34124 Daejeon (KR)
(74) Representative: Prüfer & Partner mbB Patentanwälte · Rechtsanwälte

(57) **Abstract**

A battery module includes a cell assembly including a plurality of battery cells respectively including an electrode terminal and a vent; a busbar assembly including a plurality of busbars electrically connected to the electrode terminal and a support plate supporting the plurality of busbars; and a sensing line connected to the battery cell to sense a state of the battery cell, and installed on the support plate, wherein the support plate includes a plate body opposing the vent and including a plurality of inlet ports through which gas discharged from the vent passes, a first passage in which the sensing line is installed, and a partition wall comparting the plurality of inlet ports from the first passage to block gas passing through the plurality of inlet ports from moving to the first passage.

## Description

### TECHNICAL FIELD

The disclosure and implementations disclosed in this patent document generally relate to a battery module including a plurality of battery cells and a battery pack including the same.

### BACKGROUND

Unlike a primary battery, a secondary battery may be charged and discharged, such that a secondary battery may be applied to devices in various fields such as a digital camera, a mobile phone, a laptop, a hybrid car, and an electric car. For example, a secondary battery may include a lithium secondary battery, a nickel-cadmium battery, a nickel-metal hydride battery, and a nickel-hydrogen battery.

The secondary battery may be manufactured as a flexible pouched-type battery cells or a rigid can-type battery cell. A can-type battery cell may be classified into a prismatic battery cell, a cylinder battery cell, or a coin-type battery cell depending on appearance. A plurality of battery cells may be electrically connected to each other. In this case, a plurality of cells may form a stacked cell assembly and may be disposed in a housing, and at least one cell assembly may be included in a battery device such as a battery module or a battery pack.

When various events occur, such as when a lifespan of a battery cell reaches an end point, when the battery cell swells, when the battery cell is overcharged, when the battery cell is exposed to heat, when a sharp object such as a nail damages a casing (an exterior material) of the battery cell, when external impacts are applied to the battery cell, a battery cell may be ignited. Flames or high-temperature gases ejected from a battery cell may cause chain ignition of other neighboring battery cells accommodated in the battery device.

A sensing line may be installed in a battery module or a battery pack to measure a voltage or a temperature of a battery cell. When high-temperature gas is discharged from a battery cell, the sensing line may be damaged by the high-temperature gas, such that an electrical short may occur, and accordingly, fires may occur in the battery module and/or the battery pack.

### SUMMARY

According to an aspect of the present disclosure, a battery module which may protect a sensing line from high-temperature gas and a battery pack including the same may be provided.

According to an aspect of the present disclosure, in the process of discharging high-temperature gas generated from a battery cell externally of a battery module and/or a battery pack, impact of high-temperature gas on a sensing line may be reduced.

According to an aspect of the present disclosure, a battery module which may reduce impact of gas emitted from a portion of battery cells on other battery cells, and a battery pack including the same.

According to an aspect of the present disclosure, thermal propagation of a battery module and/or a battery pack may be delayed or reduced.

A battery module and a battery pack including the same in embodiments may be widely applied an electric vehicle, a battery charging station, and the green technology field such as solar power generation and wind power generation using batteries. Also, a battery module and a battery pack including the same in embodiments may be used in an eco-friendly electric vehicle, a hybrid vehicle, or the like, to ameliorate the effects of climate change by reducing air pollution and greenhouse gas emissions.

According to an aspect of the present disclosure, a battery module includes a cell assembly including a plurality of battery cells respectively including an electrode terminal and a vent; a busbar assembly including a plurality of busbars electrically connected to the electrode terminal and a support plate supporting the plurality of busbars; and a sensing line connected to the battery cell to sense a state of the battery cell, and installed on the support plate, wherein the support plate includes a plate body opposing the vent and including a plurality of inlet ports through which gas discharged from the vent passes, a first passage in which the sensing line is installed, and a partition wall comparting the plurality of inlet ports from the first passage to block gas passing through the plurality of inlet ports from moving to the first passage.

In one embodiment, the support plate may further include a second passage through which gas passing through the plurality of inlet ports flows, and the partition wall may compart the first passage and the second passage from each other.

In one embodiment, the first passage, the second passage and the partition wall may extend in a first direction in which the plurality of battery cells are arranged, and the plurality of inlet ports may be disposed to oppose a vent of each of the battery cells in a second direction perpendicular to the first direction.

In one embodiment, the first passage may be disposed on both sides of the second passage in a third direction, the second passage may be defined by a partition wall on both sides of the second passage in the third direction, and the third direction may be a direction perpendicular to the first direction in which the plurality of battery cells are arranged.

In one embodiment, the plurality of busbars may be disposed on both sides of the support plate in the third direction, respectively, and the sensing line may be disposed on each first passage to be connected to the busbar disposed on both sides of the support plate.

In one embodiment, the second passage may extend in the first direction in which the plurality of battery cells are arranged, and the support plate may further include a flow guide guiding gas passing through the inlet port to flow in the first direction.

In one embodiment, the flow guide may include an inclined portion inclined upward from the plate body, and an extension portion extending from the inclined portion in the first direction.

In one embodiment, the support plate may further include an insulation member disposed on an internal surface of the flow guide, and the internal surface may include a surface opposing the vent.

In one embodiment, the support plate may be configured such that each of an upper side of the first passage and an upper side of the second passage has an open shape.

In one embodiment, the first passage may be defined by the partition wall and an outside wall opposing the partition wall.

In one embodiment, the outside wall may include an opening through which the sensing line passes, and the sensing line may pass through the opening from the first passage and may be connected to at least one of the plurality of busbars.

In one embodiment, the support plate may further include a fastening portion hook-coupling the busbar, and the fastening portion may include a support portion supporting one end of the busbar and a hook passing through a fastening hole formed in the busbar.

In one embodiment, the sensing line may include a cable disposed in the first passage and a sensing member connected to the cable and coupled to at least one of the plurality of busbars.

In one embodiment, the busbar assembly and the sensing line may be integrally coupled to each other to form a combination assembly, and the busbar assembly may be connected to the cell assembly while being provided on the combination assembly.

In one embodiment, at least one of the plurality of busbars may include a plurality of terminal coupling portions electrically connected to the electrode terminal, and a bent portion disposed between the plurality of terminal coupling portions and having a bent shape.

In one embodiment, the support plate may further include an electrically insulating compartment member disposed between busbars adjacent to each other among the plurality of busbars.

In one embodiment, the battery module may further include a plurality of end plates covering a side surface of the cell assembly on each of both sides in the first direction in which the plurality of battery cells are arranged; and a tightening member cover the plurality of end plates in a state in which the cell assembly is coupled to the plurality of end plates, wherein a side surface and a lower surface of the cell assembly are exposed.

According to another aspect of the present disclosure, a battery module includes a cell assembly including a plurality of battery cells respectively including an electrode terminal and a vent; a busbar assembly including a plurality of busbars electrically connected to the electrode terminal and a support plate supporting the plurality of busbars; and a sensing line connected to the battery cell to sense a state of the battery cell and installed on the support plate, wherein the support plate includes a first passage in which the sensing line is installed, a second passage through which gas discharged from the vent flows, and a partition wall comparting the first passage and the second passage from each other.

According to another aspect of the present disclosure, a battery pack includes a plurality of battery modules; a pack case accommodating the plurality of battery modules, wherein the plurality of battery modules includes a cell assembly including a plurality of battery cells respectively including an electrode terminal and a vent; a busbar assembly including a plurality of busbars electrically connected to the electrode terminal and a support plate supporting the plurality of busbars; and a sensing line connected to the battery cell to sense a state of the battery cell and installed on the support plate, wherein the support plate includes a plate body opposing the vent and including a plurality of inlet ports through which gas discharged from the vent passes, a first passage in which the sensing line is installed, a second passage through which gas passing through the plurality of inlet ports flows, and a partition wall comparting the first passage and the second passage from each other to block gas passing through the plurality of inlet ports from moving to the first passage.

In one embodiment, the pack case may include a case body in which the plurality of battery modules are disposed, a case cover covering the case body, and a venting member provided on at least one of the case body and the case cover and discharging gas flowing through the second passage, and a flow space in which gas discharged from the vent flows is formed between the second passage and the case cover.

According to one embodiment of the present disclosure, when an event occurs, the sensing line may be protected from high-temperature gas generated from the battery cell.

According to one embodiment of the present disclosure, while high-temperature gas generated from a battery cell is discharged to the outside of the battery module and/or the battery pack, the influence of high-temperature gas on the sensing line may be reduced.

According to one embodiment of the present disclosure, the influence of gas discharged from a portion of the battery cell on other battery cells may be reduced.

According to one embodiment of the present disclosure, thermal propagation of the battery module and/or battery pack may be delayed or reduced.

### BRIEF DESCRIPTION OF DRAWINGS

Certain aspects, features, and advantages of the present disclosure are illustrated by the following detailed description with reference to the accompanying drawings.
FIG. 1 is a perspective diagram illustrating a battery module according to an embodiment of the present disclosure;
FIG. 2 is an exploded perspective diagram illustrating the battery module illustrated in FIG. 1;
FIG. 3 is a perspective diagram illustrating a battery cell according to an embodiment of the present disclosure;
FIG. 4 is a perspective diagram illustrating a busbar assembly according to an embodiment of the present disclosure;
FIG. 5 is an exploded perspective diagram illustrating a combination assembly according to an embodiment of the present disclosure;
FIG. 6 is an enlarged diagram illustrating portion "A" illustrated in FIG. 5;
FIG. 7 is an enlarged diagram illustrating portion "B" illustrated in FIG. 4;
FIG. 8 is a cross-sectional diagram taken along line I-I' in FIG. 6;
FIG. 9 is a cross-sectional diagram taken along line II-II' in FIG. 6;
FIG. 10 is a diagram illustrating a state of a battery cell in which gas is discharged, illustrating a cross-section taken along line II-II' in FIG. 6;
FIG. 11 is a cross-sectional diagram illustrating a modified example of a support plate taken along line II-II' in FIG. 6;
FIG. 12 is a perspective diagram illustrating a battery pack according to an embodiment of the present disclosure; and
FIG. 13 is an exploded perspective diagram illustrating the battery pack illustrated in FIG. 12, illustrating a state in which a case cover is not provided.

### DETAILED DESCRIPTION

Features of the present disclosure in this patent document are illustrated in embodiments with reference to the accompanying drawings.

In the drawings, same elements will be indicated by same reference numerals. Also, redundant descriptions and detailed descriptions of known functions and elements that may unnecessarily make the gist of the present disclosure obscure will not be provided. Even when the drawings illustrate components having the same reference number, the plurality of drawings do not refer to the same embodiment.

In embodiments, the terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the description below, the terms such as upper side, upper portion, lower side, lower portion, side surface, front surface, rear surface, or the like, are represented with respect to the direction indicated in the drawings, and when the direction of an object is changed, the terms may also be different.

the terms "first," "second," and the like may be used to distinguish one element from the other, and may not limit a sequence and/or an importance, or others, in relation to the elements. In some cases, a first element may be referred to as a second element, and similarly, a second element may be referred to as a first element.

The present disclosure is not limited to exemplary embodiments, and it is to be understood that various modifications may be made.

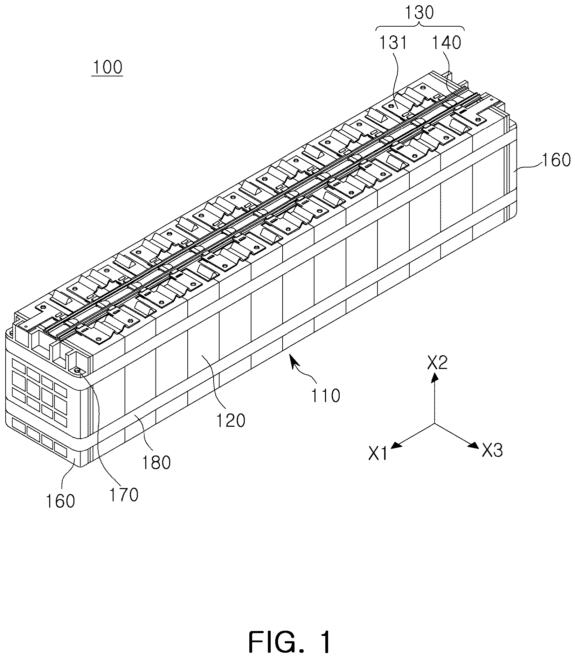

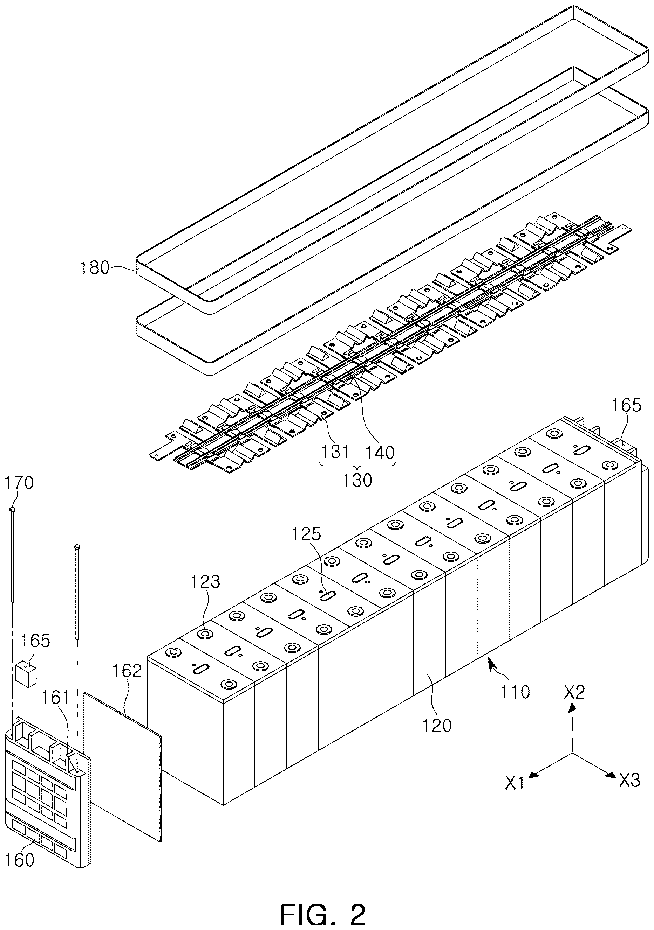

FIG. 1 is a perspective diagram illustrating a battery module 100 according to an embodiment. FIG. 2 is an exploded perspective diagram illustrating the battery module 100 illustrated in FIG. 1.

Referring to FIGS. 1 and 2, the battery module 100 according to an embodiment may include a cell assembly 110 and a busbar assembly 130.

The cell assembly 110 may include a plurality of battery cells 120 including an electrode terminal 123 and a vent 125. As an example, the battery cell 120 may include a prismatic battery cell, but an example embodiment thereof is not limited thereto.

In the cell assembly 110, a plurality of battery cells 120 may be arranged in the first direction X1. The cell assembly 110 may be formed by stacking the plurality of battery cells 120 in the first direction X1. The plurality of battery cells 120 may be fixed to each other by double-sided tape, but the method of fixing the battery cells 120 may be varied.

In the cell assembly 110, the battery cell 120 may be disposed vertically to face the second direction X2, perpendicular to the first direction X1. The electrode terminal 123 of the battery cell 120 may be disposed to face the second direction X2, perpendicular to the first direction X1. For example, the electrode terminal 123 of the battery cell 120 may be disposed on an upper surface of the battery cell 120. The vent 125 of the battery cell 120 may be disposed to face the second direction X2. For example, the electrode terminal 123 of the battery cell 120 may be disposed on the upper surface of the battery cell 120. The electrode terminal 123 may be disposed on both sides of the vent 125 in the third direction X3. The third direction X3 may perpendicular to the first direction X1, which is the stacking direction of the battery cell 120, and the second direction X2 in which the vent 125 of the battery cell 120 faces. A dispositional direction of the battery cell 120 and the dispositional positions of the electrode terminal 123 and the vent 125 may be varied.

The busbar assembly 130 may include a plurality of busbars 131 electrically connected to the electrode terminal 123, and a support plate 140 supporting the plurality of busbars 131. The busbar 131 may include an electrically conductive material, and the support plate 140 may include an electrically insulating material.

The plurality of busbars 131 may be respectively disposed on both sides of the support plate 140 To electrically connect the electrode terminals 123, disposed on one side and the other side of the battery cell 120, to each other. The plurality of busbars 131 may be disposed on both sides in the third direction X3 of the support plate 140, respectively. For example, the plurality of busbars 131 may be disposed on one side of the support plate 140, and the plurality of busbars 131 may be disposed on the other side of the support plate 140.

The battery module 100 may include a plurality of end plates 160 disposed on an external side of the cell assembly 110 to protect the cell assembly 110. The plurality of end plates 160 may cover a side surface of the cell assembly 110 on each of both sides in the first direction X1 in which the plurality of battery cells 120 are arranged. The output terminal 165 connected to the busbar 131 may be disposed on the end plate 160. The output terminal 165 may be provided for electrical connection with the output terminal 165 of the battery module 100 adjacent thereto.

A compressible pad 162 may be disposed between the end plate 160 and the cell assembly 110. The compressible pad 162 may be compressed and elastically deformed when the battery cell 120 expands, thereby preventing expansion of the entire volume of the cell assembly 110. The compressible pad 162 may be formed of foam of a polyurethane material, but the material or the structure thereof is not limited thereto. The compressible pad 162 may have a size corresponding to a wide surface of the battery cell 120, but the size thereof may be varied. The compressible pad 162 may include an adhesive pad or a double-sided tape to fix the end plate 160 and the cell assembly 110.

The cell assembly 110 and the end plate 160 may be coupled to each other by a tightening member 180. The tightening member 180 may cover or enclose the plurality of end plates 160 in a state in which the cell assembly 110 and the plurality of end plates 160 are coupled to each other. The tightening member 180 may include a steel band or strap, but the material or the shape thereof may be varied. When the cell assembly 110 is coupled to the end plate 160 through the tightening member 180, a side surface and a lower surface of the cell assembly 110 may be exposed externally. In this case, since the side surface of the cell assembly 110 is exposed rather than being covered by a side plate, energy density of the battery module 100 may be improved. In embodiments, the example in which the side plate covering the side surface of the cell assembly 110 is disposed on both sides in the third direction In X3 is not excluded.

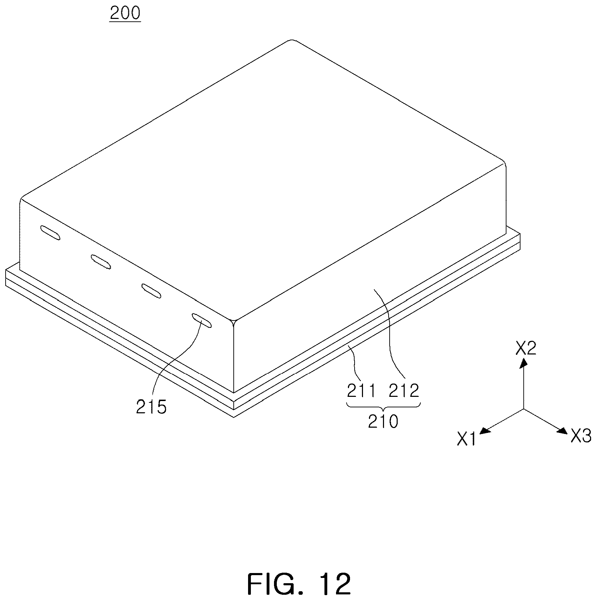

In a state in which the cell assembly 110 and the end plate 160 are coupled to each other, the end plate 160 may be installed in the battery pack (200 in FIG. 12). The end plate 160 may include a fastening member 170 for coupling to the battery pack 200. The fastening member 170 may include a bolt penetrating the end plate 160 in the second direction X2. Referring to FIG. 12 together, the fastening member 170 may pass through the through-hole 161 formed in the end plate 160 and may be fastened to the case body 211 of the battery pack 200. A nut may be installed on the case body 211 to be coupled to the fastening member 170.

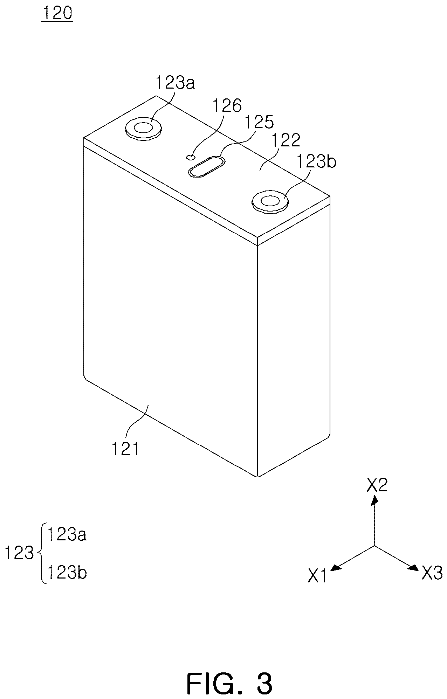

FIG. 3 is a perspective diagram illustrating a battery cell according to an embodiment.

The battery cell 120 according to an embodiment may be configured as a secondary battery. In embodiments, the battery cell 120 may include a prismatic battery cell as an example, but the shape of the battery cell 120 is not limited to a hexahedral structure. For example, the battery cell 120 may include a pouched-type battery cell, a cylinder battery cell, and a coin-type battery cell.

The battery cell 120 may include a casing 121, a cap plate 122, an electrode terminal 123 and a vent 125.

The casing 121 may form a space in which the electrode assembly is accommodated. The casing 121 may have one surface having an open shape, and the electrode assembly may be accommodated in an internal space of the casing 121 through the open portion of the casing 121.

The electrode assembly may include a plurality of electrode plates and a plurality of separators. The electrode plate may include a positive electrode and a negative electrode. The separator may include an insulator interposed between a negative electrode and a positive electrode. The electrode assembly may include a stack type in which a negative electrode, a positive electrode and a separator are alternately stacked, or a jelly roll type in which stacked negative electrode, positive electrode and separator are wound together. Each of the negative electrode and the positive electrode may have a structure in which a negative electrode active material or a positive electrode active material is coated on a foil. For example, a negative electrode may be formed by coating a foil of copper or a nickel material with graphite, and a positive electrode may be formed by coating a foil of an aluminum material with a transition metal oxide active material.

The cap plate 122 may cover the open portion of the casing 121. The cap plate 122 may be welded and coupled to the casing 121.

The casing 121 and the cap plate 122 may be coupled to each other and may form an exterior of the battery cell 120. The casing 121 and the cap plate 122 may be formed of aluminum or a material including aluminum, but the material of the casing 121 and the cap plate 122 is not limited thereto.

The electrode terminal 123 may be disposed on the cap plate 122. The electrode terminal 123 may include a positive terminal 123a connected to a positive electrode and a negative terminal 123b connected to a negative electrode. The positive terminal 123a may be connected to the positive electrode through a positive electrode tab extending from the positive electrode, and the negative terminal 123b may be connected to the negative electrode through a negative electrode tab extending from the negative electrode.

The electrode terminal 123 may be disposed to face the same direction on one side of the casing 121. For example, the cap plate 122 may be disposed on one side of the casing 121, and both a positive terminal 123a and a negative terminal 123b may be disposed on the cap plate 122. The dispositional structure of the electrode terminal 123 is not limited thereto. For example, the electrode terminal 123 may be disposed on each of one side and the other side of the casing 121. That is, the cap plate 122 may be disposed on each of one side and the other side of the casing 121, and the positive terminal 123a or the negative terminal 123b may be disposed on the cap plates 122. Alternatively, the electrode terminal 123 may include a plurality of positive terminal 123a and a plurality of negative terminal 123b. In this case, the positive terminal 123a and the negative terminal 123b may be disposed on one side and the other side of the casing 121, respectively.

A vent 125 may be installed in at least one of the cap plate 122 and the casing 121. As an example, the vent 125 may be installed on the cap plate 122. The vent 125 may be fixed to the casing 121 by welding, such as laser welding. The vent 125 may be configured to discharge gas generated in the casing 121 to the outside of the casing 121. For example, the vent 125 may be configured to break at a preset pressure when the internal pressure of the casing 121 increases by gas generated in the casing 121. The installation position and the number of the vent 125 may be varied. For example, the vent 125 may be installed in the casing 121, and a plurality of the vents 125 may be installed in at least one of the cap plate 122 and the casing 121.

Electrolyte may be accommodated in the casing 121. A stopper 126 closing an electrolyte inlet port after electrolyte is injected into an internal space of the casing 121 may be installed on the cap plate 122.

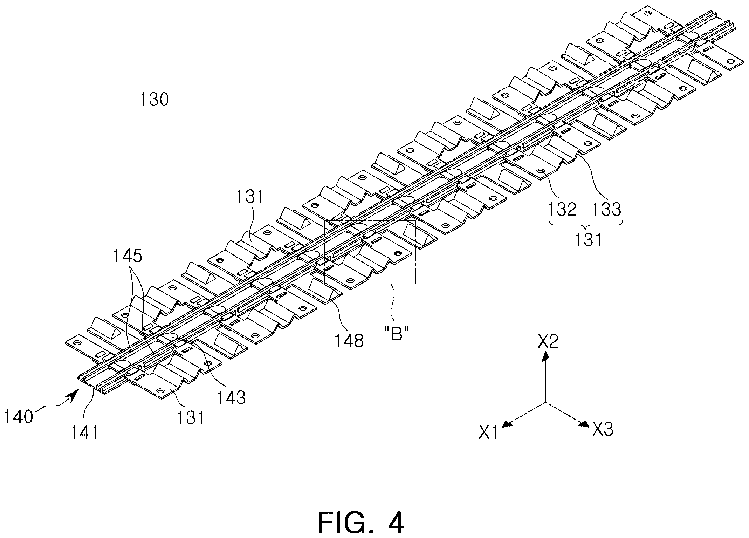

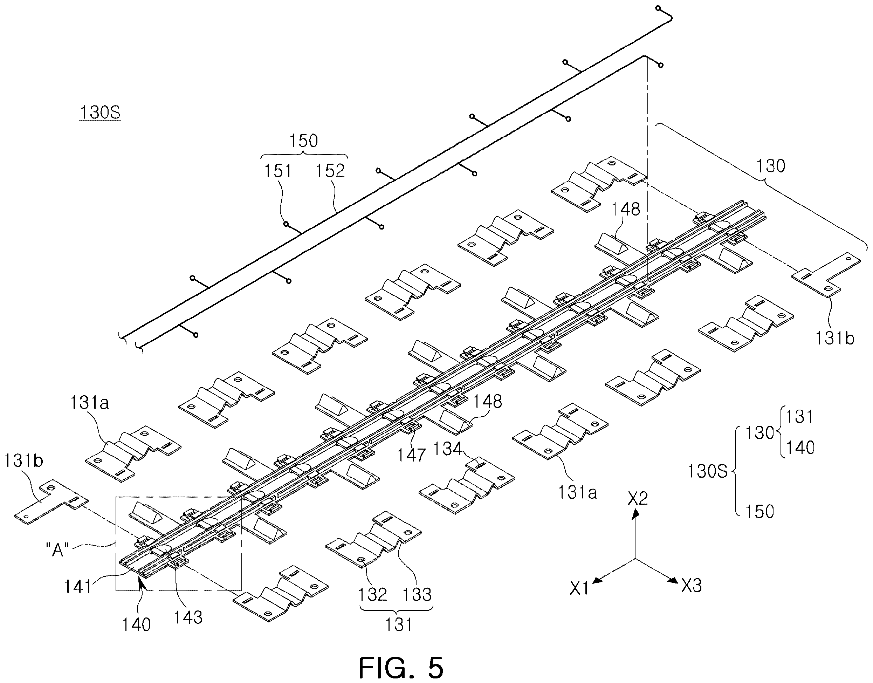

FIG. 4 is a perspective diagram illustrating a busbar assembly 130 according to an embodiment. FIG. 5 is an exploded perspective diagram illustrating a combination assembly 130S according to an embodiment.

A busbar assembly 130 and a combination assembly 130S will be described with reference to FIGS. 4 and 5 together with FIG. 2.

The busbar assembly 130 may include a plurality of busbars 131 and a support plate 140. The plurality of busbars 131 may include a first busbar 131a electrically connecting the electrode terminals 123 of the plurality of battery cells 120 to each other and a second busbar 131b electrically connecting the electrode terminal 123 of the battery cell 120 to the output terminal 165.

At least one of the plurality of busbars 131 may include a plurality of terminal coupling portions 132 electrically connected to the electrode terminal 123 of the battery cell 120. The plurality of terminal coupling portions 132 may electrically connect the plurality of battery cells 120 to each other. The busbar 131 may be fixed to the electrode terminal 123 of the battery cell 120 by welding. The terminal coupling portion 132 may include a plane having a hole in contact with the electrode terminal 123. When the terminal coupling portion 132 and the electrode terminal 123 are able to be electrically connected to each other, the shape or the structure of the terminal coupling portion 132 may be varied.

At least one of the plurality of busbars 131 may include a bent portion 133 disposed between the plurality of terminal coupling portion 132 and having a bent shape. The bent portion 133 may have a shape protruding from a terminal coupling portion 132 in the vertical direction. The bent portion 133 may have a shape bent from the terminal coupling portion 132. For example, the bent portion 133 may include a U or V-shaped cross-section. The bent portion 133 may protect electrical connection state between the busbar 131 and the electrode terminal 123 by buffering deformation of the battery cell 120 or impact applied to the battery cell 120. The bent portion 133 may prevent coupling between the electrode terminal 123 of the battery cell 120 and the busbar 131 from being released due to expansion or impact of the battery cell 120.

The support plate 140 may include a plate body 141 and a partition wall 145. The plate body 141 may oppose the vent 125 of the battery cell 120. The partition wall 145 may protect a sensing line 150 from gas discharged from the vent 125.

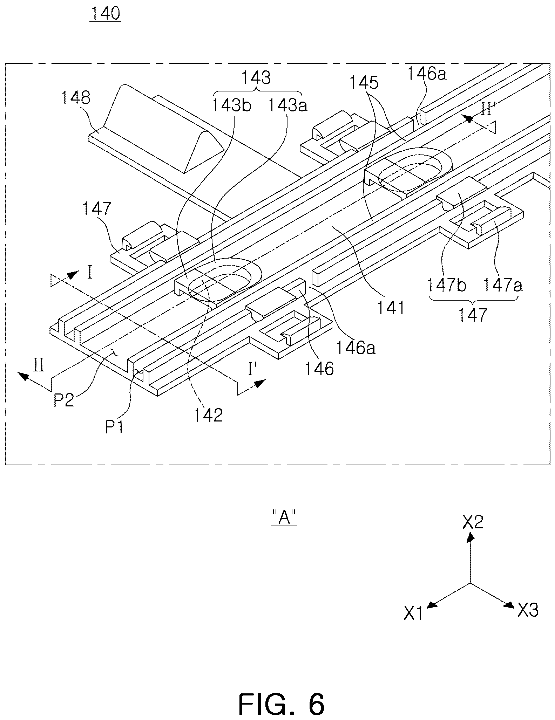

The support plate 140 may include a flow guide 143 guiding gas passing through the inlet port (142 in FIG. 6) to flow in the first direction X1. Gas discharged from the vent 125 of the battery cell 120 may be guided by the flow guide 143 and may flow in the first direction X1.

The support plate 140 may further include a fastening portion 147 to which the busbar 131 is fastened. The busbar 131 may include a fastening hole 134 coupled to the fastening portion 147 of the support plate 140. As an example, the busbar 131 may be hook-coupled to the fastening portion 147 of the support plate 140.

The support plate 140 may further include a compartment member 148 electrically insulated and disposed between adjacent busbars 131 among the plurality of busbars 131. The compartment member 148 may prevent the plurality of busbars 131 spaced apart from in the first direction X1 from being electrically contacted.

The sensing line 150 may be connected to the battery cell 120 to sense the state of the battery cell 120. The sensing line 150 may be installed on the support plate 140.

The sensing line 150 may be provided to measure the operating state of the battery cell 120. The sensing line 150 may be connected to a cell monitoring unit and/or a battery management system (BMS) to prevent overcharging of the battery cell 120 and/or to perform voltage balancing.

The sensing line 150 may include a cable 152 disposed on the support plate 140 and a sensing member 151 connected to the cable 152 and coupled to at least one of the plurality of busbars 131.

The sensing member 151 may include at least one of a voltage sensing terminal for receiving a voltage signal of the battery cell 120 and a temperature sensor for measuring temperature of the battery cell 120. The sensing member 151 coupled to the busbar 131 may be provided as a voltage sensing terminal. As an example, the sensing member 151 may be welded and coupled or bonded to the busbar 131. The sensing member 151 may be disposed in at least a portion of the plurality of busbars 131. When busbar 131 is disposed on both sides of the support plate 140 in the third direction X3, the sensing member 151 may be disposed on at least a portion of the busbar 131 installed on one side of the support plate 140 and on at least a portion of the busbar 131 installed on the other side of the support plate 140. The temperature senser may be in contact with the battery cell 120 or may be installed to be adjacent to the battery cell 120 to measure temperature of the battery cell 120. The installation position and the number of the sensing member 151 may be varied.

The cable 152 may connect the sensing member 151 to a cell monitoring unit or a battery management system. Accordingly, the state information of the battery cell 120 sensed through the sensing member 151 may be transferred to a cell monitoring unit or a battery management system. The cable 152 may be configured as an electric wire. The cable 152 may also be provided as a printed circuit board or a flexible printed circuit board.

The busbar assembly 130 and the sensing line 150 may be integrally coupled to each other to form a combination assembly 130S. The sensing member 151 of the sensing line 150 may be welded to the busbar 131 and coupled to the busbar assembly 130. The busbar assembly 130 may be connected to the cell assembly 110 in a state in which the sensing line 150 is coupled and included in the combination assembly 130S. The busbar assembly 30 may be connected to the cell assembly 110 while being provided on the combination assembly 130S. Accordingly, the cell assembly 110, the busbar assembly 130 and the sensing line 150 may be coupled to each other, such that assembly properties may be improved.

FIG. 6 is an enlarged diagram illustrating portion "A" illustrated in FIG. 5, illustrating a support plate 140.

Referring to FIG. 6 together with FIGS. 2 and 5, the support plate 140 may include a plate body 141 opposing the vent 125, a first passage P1 in which the sensing line 150 is installed, and a partition wall 145 comparting the plurality of inlet ports 142 from the first passage P1. The support plate 140 may further include a second passage P2 through which gas flowing through the plurality of inlet ports 142 flows.

The plate body 141 may be disposed to oppose the vent 125 of the battery cell 120 in the second direction X2. A plurality of inlet ports 142 through which gas discharged from the vent 125 of the battery cell 120 passes may be formed in the plate body 141. The plurality of inlet ports 142 may be disposed to oppose the vent 125 of each battery cell 120 in the second direction X2. The plurality of inlet ports 142 may be disposed in positions corresponding to the vents 125 of battery cells 120, respectively, and the number of the plurality of inlet ports 142 may correspond to the number of the vents 125.

The first passage P1 may be disposed on an upper side of the plate body 141 and may form a space in which the sensing line 150 is installed. That is, plate body 141 may be disposed between the first passage P1 and the battery cell 120 in the first direction X1. The first passage P1 may extend in the first direction X1 in which the battery cell 120 is arranged.

The partition wall 145 may block gas passing through the plurality of inlet ports 142 from moving to the first passage P1 in which the sensing line 150 is installed. The partition wall 145 may protect the sensing line 150 from high-temperature gas discharged from the battery cell 120. The partition wall 145 may be formed of a wall protruding from the plate body 141 in a direction opposite to the vent 125 to compart the plurality of inlet ports 142 from the first passage P1. The partition wall 145 may extend in the first direction X1 in which the battery cell 120 is arranged.

The second passage P2 may provide a space in which gas passing through the plurality of inlet ports 142 flows. The second passage P2 may be comparted from the first passage P1 by the partition wall 145. That is, the partition wall 145 may compart the first passage P1 from the second passage P2. Accordingly, high-temperature gas discharged from the battery cell 120 may flow in the first direction X1 along the second passage P2, and the sensing line 150 disposed in the first passage P1 may be protected from high-temperature gas or flame by the partition wall 145.

The first passage P1, the second passage P2 and the partition wall 145 may extend in the first direction X1 in which the plurality of battery cells 120 are arranged.

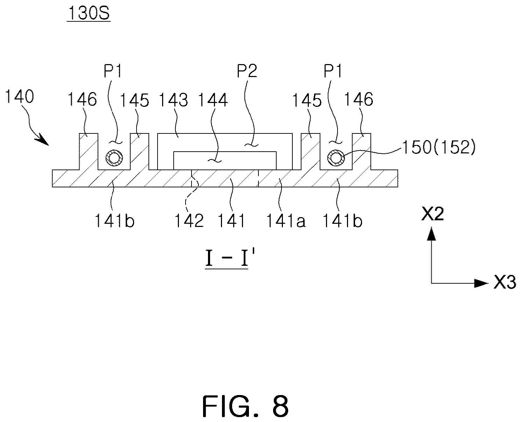

The support plate 140 may further include a plurality of flow guide 143 guiding gas flowing through the inlet port 142 to flow in the first direction X1. The flow guide 143 may be disposed in the second passage P2. Each of the flow guides 143 may have a shape covering the inlet port 142. The flow guide 143 may include an incline portion 143a inclined upward from the plate body 141, and an extension portion 143b extending from the inclined portion 143a in the first direction X1. The incline portion 143a faces an upper side from the plate body 141 and forming a slope. The flow guide 143 may include an outlet port (144 in FIG. 8) formed between the extension portion 143b and the plate body 141. high-temperature gas discharged from the battery cell 120 in the second direction may pass through the inlet port 142, may hit the inclined portion 143a, and a flow direction of the gas may be changed. The extension portion 143b may guide the gas hitting the inclined portion 143a to flow with directionality in the first direction X1.

The first passage P1 may be disposed on each of both sides of the second passage P2 in the third direction X3. The sensing line 150 may be disposed in each of the first passages P1. When the plurality of busbars 131 are disposed on both sides of the support plate 140 in the third direction X3, the sensing line 150 may be disposed on each first passage P1 to be connected to the busbars 131 disposed on both sides of the support plate 140.

The first passage P1 may be defined by the partition wall 145 and the outside wall 146 opposing the partition wall 145. That is, the first passage P1 may be disposed between the partition wall 145 disposed on a central side of the support plate 140 and the outside wall 146 disposed on an external side of the support plate 140. Also, a lower side of the first passage P1 may be defined by the plate body 141. Meanwhile, the first passage P1 may have a shape in which an upper side thereof is open. As described above, when the upper side of the first passage P1 is open, the process of installing the sensing line 150 in the first passage P1 may be easily performed, and also the first passage P1 may be easily formed on the support plate 140. In embodiments, the shape of the upper side of the first passage P1 is not limited to an open shape, and a cover covering the first passage P1 may be disposed on an upper side of the first passage P1.

The second passage P2 may be defined by the partition wall 145 on both sides of the second passage P2 in the third direction X3 of the support plate 140. That is, the partition wall 145 may be disposed on one side and the other side in the third direction X3 of the second passage P2. The lower side of the second passage P2 may be defined by the plate body 141. The second passage P2 may have a shape in which an upper side thereof is open. As described above, when the upper side of the second passage P2 is open, the second passage P2 and the flow guide 143 may be easily formed on the support plate 140. In embodiments, the shape of the upper side of the second passage P2 is not limited to an open shape, and a cover may be disposed on the upper side of the second passage P2.

The outside wall 146 may include an opening 146a through which the sensing line 150 passes. The sensing line 150 may pass through the opening 146a from the first passage P1 and may be connected to at least one of the plurality of busbars 131.

The support plate 140 may include a fastening portion 147 for coupling the busbar 131. The fastening portion 147 may include a support portion 147b supporting one end of the busbar 131 and a hook 147a passing through the fastening hole 134 formed in the busbar 131.

The support plate 140 may further include a compartment member 148 electrically insulated and disposed between adjacent busbars 131 among the plurality of busbars 131. The compartment member 148 may prevent the plurality of busbars 131 from being electrically contacted when an event occurs due to impacts.

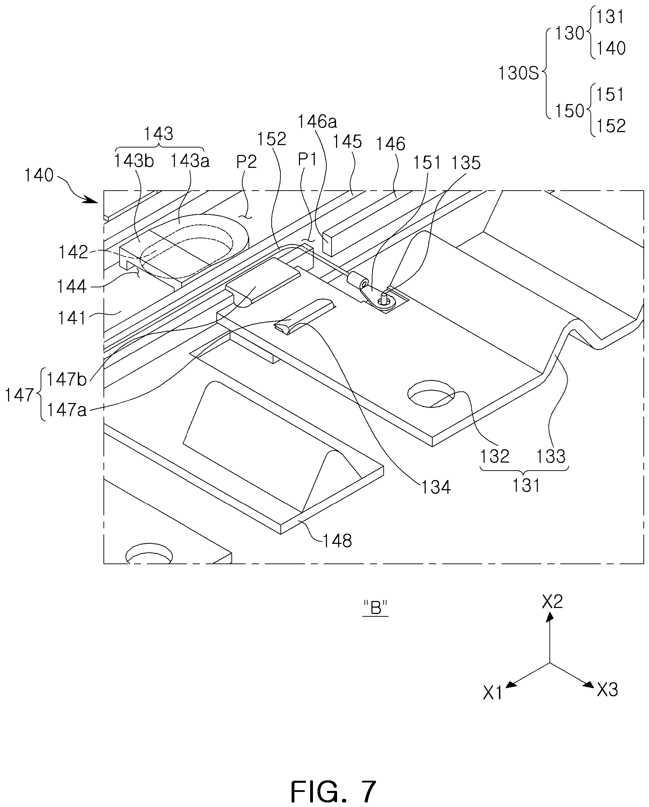

FIG. 7 is an enlarged diagram illustrating portion "B" illustrated in FIG. 4. FIG. 7 illustrates a combination assembly 130S in which the busbar assembly 130 and the sensing line 150 are coupled to each other.

Referring to FIG. 7 together with FIGS. 2, 4 and 5, a combination assembly 130S may include a busbar assembly 130 and a sensing line 150. The busbar assembly 130 may include a busbar 131 and a support plate 140, and the sensing line 150 may include a sensing member 151 and a cable 152.

The busbar 131 may be fastened to the support plate 140 through a fastening portion 147. The fastening portion 147 may hook-coupled to the busbar 131. When the busbar 131 and the support plate 140 are hook-coupled to each other, the busbar 131 may be easily installed on the support plate 140. The fastening portion 147 may include a support portion 147b supporting one end of the busbar 131 and a hook 147a passing through the fastening hole 134 formed in the busbar 131. In a state in which one end of the busbar 131 is supported by the support portion 147b, the busbar 131 may be hook-coupled to the hook 147a, such that the busbar 131 may be stably installed on the support plate 140.

At least one of the plurality of busbars 131 may include a plurality of terminal coupling portions 132 and a bent portion 133. The bent portion 133 may protrude in the vertical direction from a terminal coupling portion 132 and may have a bent shape. The bent portion 133 may protect the electrical connection state between the busbar 131 and the electrode terminal 123 by buffering deformation of the battery cell 120 or impacts applied to the battery cell 120.

The sensing line 150 may include a cable 152 disposed in a first passage P1 and a sensing member 151 electrically connected to the busbar 131. When the sensing member 151 is coupled to the busbar 131, the cable 152 may pass through the outside wall 146. The outside wall 146 may include an opening 146a through which the sensing line 150 passes. The cable 152 of the sensing line 150 may pass through the opening 146a from the first passage P1, and the sensing member 151 of the sensing line 150 may be connected to at least one of the plurality of busbars 131.

The sensing member 151 may be coupled to the sensor coupling portion 135 provided on the busbar 131. For example, the sensor coupling portion 135 may configured as a protrusion, and the sensor coupling portion 135 may be inserted into a hole of the sensing member 151 and may be fixed by welding, or the like. The shape or the method for coupling between the sensing member 151 and the busbar 131 may be varied.

The flow guide 143 of the support plate 140 may include an inclined portion 143 a and an extension portion 143b having a shape covering the inlet port 142, and may include an outlet port 144 formed between the extension portion 143b and the plate body 141.

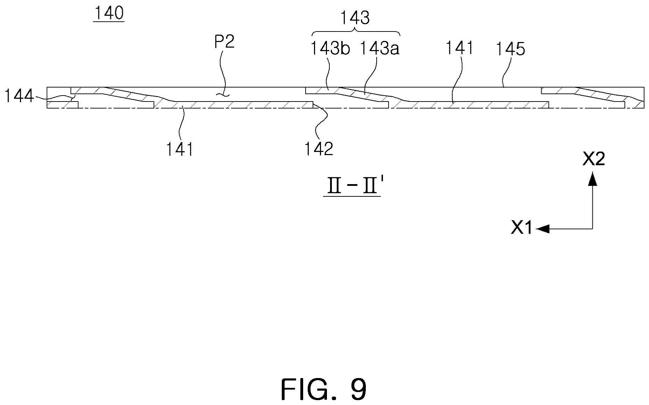

FIG. 8 is a cross-sectional diagram taken along line I-I' in FIG. 6. FIG. 9 is a cross-sectional diagram taken along line II-II' in FIG. 6. FIG. 8 illustrates a combination assembly 130S, and FIG. 9 illustrates a support plate 140.

Referring to FIGS. 8 and 9, the support plate 140 may include a plate body 141 opposing the vent 125, a first passage P1 in which the sensing line 150 is installed, a second passage P2 into which gas passing through the plurality of inlet ports 142 flows, and a partition wall 145 partitioning the first passage P1 and the second passage P2 from each other. The support plate 140 may include an outside wall 146 opposing the partition wall 145 with the first passage P1 interposed therebetween.

The side surface of the first passage P1 may be defined by the partition wall 145 and the outside wall 146, and a lower surface of the first passage P1 may be defined by the second portion 141b of the plate body 141. The cable 152 of the sensing line 150 may be installed in the first passage P1.

A side surface of the second passage P2 may be defined by the partition walls 145 opposing each other, and a lower surface of the second passage P2 may be defined by the first portion 141a of the plate body 141. The second passage P2 may form a space in which gas discharged through the inlet port 142, the flow guide 143, and the outlet port 144 flows. The flow guide 143 may include an inclined portion 143a facing an upper side from the plate body 141 and forming a slope, an extension portion 143b extending from the inclined portion 143a in the first direction X1, and an outlet port 144 formed between the extension portion 143b and the plate body 141.

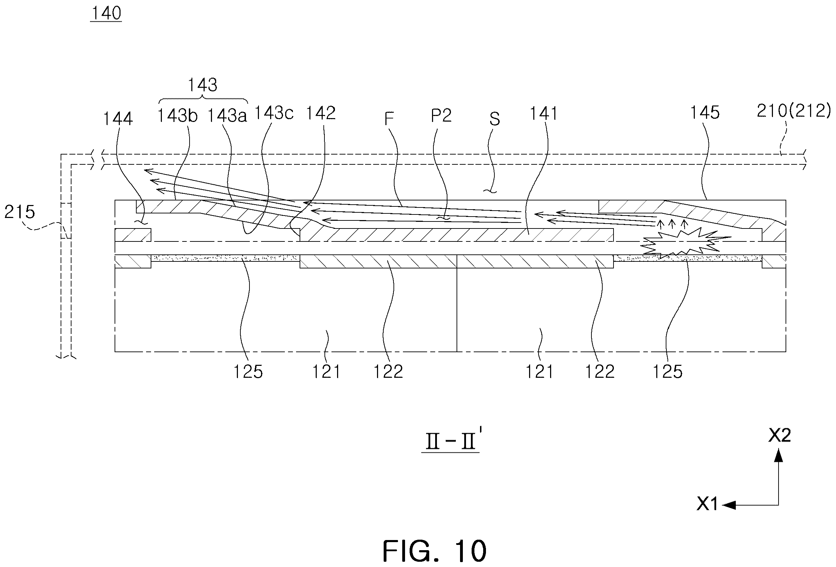

FIG. 10 is a diagram illustrating a state of a battery cell in which gas is discharged, illustrating a cross-section taken along line II-II' in FIG. 6.

Referring to FIG. 10, a vent 125 may be disposed on a cap plate 122 of a battery cell 120. The inlet port 142 of the support plate 140 may be disposed in a position opposing the vent 125 in the second direction X2.

When internal pressure of the battery cell 120 increases and the vent 125 is broken, gas in the battery cell 120 may be discharged through the vent 125. Gas discharged from the vent 125 of the battery cell 120 may pass through the inlet port 142 and may flow in the first direction X1 by the flow guide 143. Specifically, high-temperature gas discharged from the battery cell 120 in the second direction X may pass through the inlet port 142, may hit the inclined portion 143a of the flow guide 143, and a flow direction of the gas may be changed. The extension portion 143b of the flow guide 143 may guide the gas hitting the inclined portion 143a to flow with directionality in the first direction X1. Gas discharged through the outlet port 144 of the flow guide 143 may flow in the first direction X1 in the second passage P2. In FIG. 10, the arrow may indicate a gas flow F.

When an upper side of the second passage P2 is open, gas may flow in the first direction X1 along a flow space S between the pack case 210 of the battery pack (200 in FIG. 12) and the second passage P2, and may be discharged externally of the pack case 210 through the venting member 215. In embodiments, the shape of an upper side of the second passage P2 is not limited to an open shape, and a cover covering the second passage P2 may be disposed on the upper side of the second passage P2.

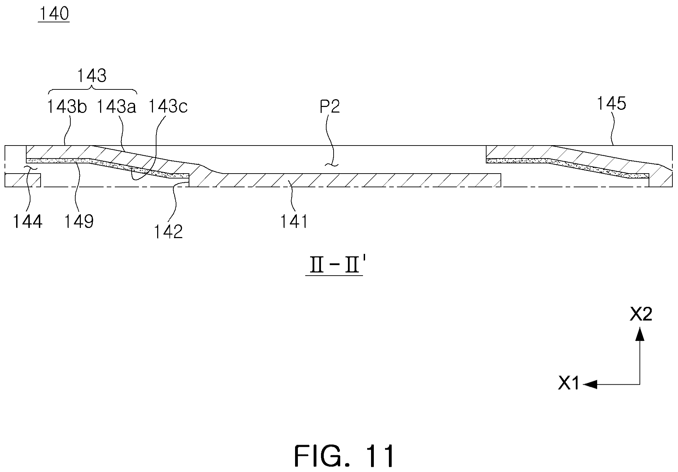

FIG. 11 is a cross-sectional diagram illustrating a modified example of a support plate taken along line II-II' in FIG. 6.

As compared to the support plate 140 illustrated in FIG. 9, the support plate 140 illustrated in FIG. 11 may be different in that the support plate 140 may further include the insulation member 149 disposed on the internal surface 143c of the flow guide 143.

The internal surface 143c of the flow guide 143 may include a surface opposing the vent 125. For example, the internal surface 143c may be formed across the inclined portion 143a and the extended portion 143b.

The insulation member 149 may include a material having at least one of flame retardancy, heat resistance, and insulating properties to withstand high-temperature gas discharged from the vent 125. Here, heat resistance may indicate properties in which a material does not melt and a shape thereof does not change even at temperature of 300 degrees Celsius or more. Insulating properties may indicate properties having thermal conductivity of 1.0W/mK or less. To ensure higher insulating properties, thermal conductivity may have a value of 0.5 W/mK or less, or a value of 0.3 W/mK or less. Flame retardancy may be properties preventing or suppressing self-combustion when the fire source is removed, and may indicate a rating of V-0 or higher in the UL94 V test, for example.

For example, the insulation member 149 may include at least a portion of material which may prevent spread of heat and/or flame, such as mica, silica, silicate, graphite, alumina, ceramic wool, and aerogel. The material of the insulation member 149 is not limited thereto, and various known materials may be used as long as the shape of the support plate 140 may be maintained in a thermal runaway situation of the battery cell 120. Also, the insulation member 149 may be applied or attached to the support plate 140.

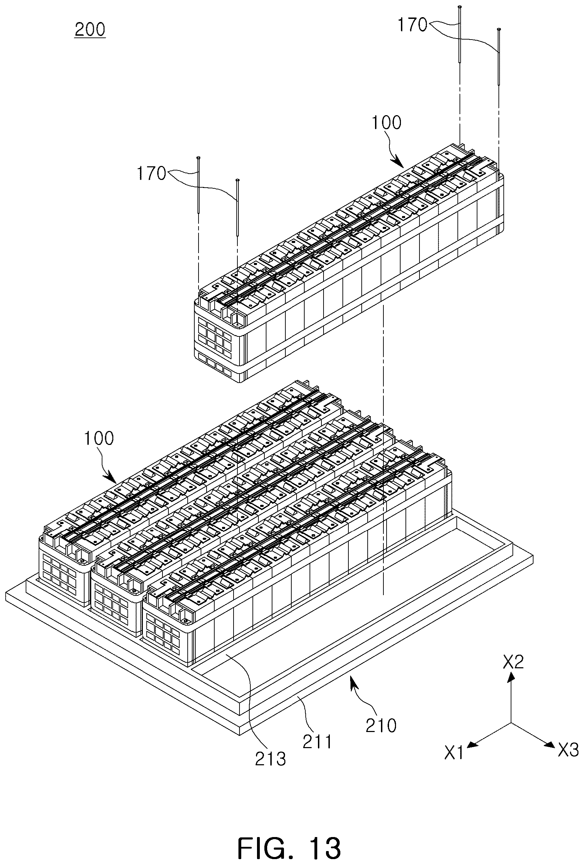

FIG. 12 is a perspective diagram illustrating a battery pack 200 according to an embodiment. FIG. 13 is an exploded perspective diagram illustrating the battery pack illustrated 200 in FIG. 12, illustrating a state in which a case cover 212 is not provided.

The battery pack 200 according to an embodiment may include a plurality of battery modules 100 and a pack case 210 accommodating the plurality of battery modules 100. The battery module 100 provided in the battery pack 200 may include the battery module 100 described with reference to FIGS. 1 to 11 .

The pack case 210 may include a case body 211 in which the plurality of battery modules 100 are disposed, and a case cover 212 covering the case body 211. The case body 211 and the case cover 212 may form a space for accommodating the battery module 100 in a coupled to state. The pack case 210 may include a compartment wall 213 comparting the space in which the plurality of battery modules 100 are disposed.

The battery module 100 may be fastened to the case body 211 of the pack case 210 through the fastening member 170. The fastening member 170 may include a bolt penetrating the end plate 160 in the second direction X2.

The pack case 210 may include a venting member 215 discharging gas flowing through the second passage P2. The venting member 215 may be provided on at least one of the case body 211 and the case cover 212. As an example, the venting member 215 may be disposed on the case cover 212. The venting member 215 may be disposed in a position corresponding to the second passage P2 of each battery module 100. As an example, when four battery modules 100 are disposed in the pack case 210, four venting members 215 may also be disposed. However, the installation position and the number of the venting member 215 may be varied. For example, when four battery modules 100 are disposed in the pack case 210, one or two venting members 215 may be disposed.

Referring to FIG. 10 together, a flow space S through which gas discharged from the vent 125 of the battery cell 120 flows may be formed between the second passage P2 of the battery module 100 and the case cover 212.

The venting member 215 may include a hole formed in the pack case 210. In this case, the venting member 215 may be configured as a normally open type. Alternatively, the venting member 215 may be configured as a normally closed type which may be normally closed and open when pressure in the battery pack 200 increases. The normally closed type venting member may be applied in various forms such as a flap and valve structure.

Only specific examples of implementations of certain embodiments are described. Variations, improvements and enhancements of the disclosed embodiments and other embodiments may be made with respect to the disclosure of this patent document. Additionally, the above-described embodiments may be implemented by deleting some components, and each embodiment may be implemented in combination with each other.

## Claims

1. A battery module, comprising:
a cell assembly including a plurality of battery cells respectively including an electrode terminal and a vent;
a busbar assembly including a plurality of busbars electrically connected to the electrode terminal and a support plate supporting the plurality of busbars; and
a sensing line connected to the battery cell to sense a state of the battery cell, and installed on the support plate,
wherein the support plate includes a plate body opposing the vent and including a plurality of inlet ports through which gas discharged from the vent passes, a first passage in which the sensing line is installed, and a partition wall comparting the plurality of inlet ports from the first passage to block gas passing through the plurality of inlet ports from moving to the first passage.

2. The battery module of claim 1,
wherein the support plate further includes a second passage through which gas passing through the plurality of inlet ports flows, and
wherein the partition wall comparts the first passage and the second passage from each other.

3. The battery module of claim 2,
wherein the first passage, the second passage and the partition wall extend in a first direction in which the plurality of battery cells are arranged, and
wherein the plurality of inlet ports are disposed to oppose a vent of each of the battery cells in a second direction perpendicular to the first direction.

4. The battery module of claim 2 or claim 3,
wherein the first passage is disposed on both sides of the second passage in a third direction,
wherein the second passage is defined by a partition wall on both sides of the second passage in the third direction, and
wherein the third direction is a direction perpendicular to the first direction in which the plurality of battery cells are arranged.

5. The battery module of claim 4,
wherein the plurality of busbars are disposed on both sides of the support plate in the third direction, respectively, and
wherein the sensing line is disposed on each first passage to be connected to the busbar disposed on both sides of the support plate.

6. The battery module of any one of claims 2 to 5,
wherein the second passage extends in the first direction in which the plurality of battery cells are arranged, and
wherein the support plate further includes a flow guide guiding gas passing through the inlet port to flow in the first direction.

7. The battery module of claim 6, wherein the flow guide includes an inclined portion inclined upward from the plate body, and an extension portion extending from the inclined portion in the first direction.

8. The battery module of claim 6,
wherein the support plate further includes an insulation member disposed on an internal surface of the flow guide, and
wherein the internal surface includes a surface opposing the vent.

9. The battery module of any one of claims 2 to 8, wherein the support plate is configured such that each of an upper side of the first passage and an upper side of the second passage has an open shape.

10. The battery module of any one of claims 2 to 9, wherein the first passage is defined by the partition wall and an outside wall opposing the partition wall,
wherein the outside wall includes an opening through which the sensing line passes, and
wherein the sensing line passes through the opening from the first passage and is connected to at least one of the plurality of busbars.

11. The battery module of any one of claims 1 to 10,
wherein the support plate further includes a fastening portion hook-coupling the busbar, and
wherein the fastening portion includes a support portion supporting one end of the busbar and a hook passing through a fastening hole formed in the busbar.

12. The battery module of any one of claims 1 to 11, wherein the sensing line includes a cable disposed in the first passage and a sensing member connected to the cable and coupled to at least one of the plurality of busbars,
wherein the busbar assembly and the sensing line are integrally coupled to each other to form a combination assembly, and
wherein the busbar assembly is connected to the cell assembly while being provided on the combination assembly.

13. The battery module of any one of claims 1 to 12, wherein at least one of the plurality of busbars includes a plurality of terminal coupling portions electrically connected to the electrode terminal, and a bent portion disposed between the plurality of terminal coupling portions and having a bent shape.

14. A battery pack, comprising:
a plurality of battery modules;
a pack case accommodating the plurality of battery modules,
wherein the plurality of battery modules includes:
a cell assembly including a plurality of battery cells respectively including an electrode terminal and a vent;
a busbar assembly including a plurality of busbars electrically connected to the electrode terminal and a support plate supporting the plurality of busbars; and
a sensing line connected to the battery cell to sense a state of the battery cell and installed on the support plate,
wherein the support plate includes a plate body opposing the vent and including a plurality of inlet ports through which gas discharged from the vent passes, a first passage in which the sensing line is installed, a second passage through which gas passing through the plurality of inlet ports flows, and a partition wall comparting the first passage and the second passage from each other to block gas passing through the plurality of inlet ports from moving to the first passage.

15. The battery pack of claim 14,
wherein the pack case includes a case body in which the plurality of battery modules are disposed, a case cover covering the case body, and a venting member provided on at least one of the case body and the case cover and discharging gas flowing through the second passage, and
wherein a flow space in which gas discharged from the vent flows is formed between the second passage and the case cover.
